# EUROPÄISCHE PATENTSCHRIFT

(11) **EP 1 080 629 B1**
(45) Veröffentlichungstag und Bekanntmachung des Hinweises auf die Patenterteilung: **31.03.2004**
(21) Anmeldenummer: 00118337.5
(22) Anmeldetag: 24.08.2000
(51) Int. Cl.: A01F 29/20

(54) **Verfahren und Vorrichtung zum Einstellen des Schneidspaltes an Häckslern**
Method and device for adjusting the cutting knife clearance in shredders
Procédé et dispositif pour ajuster le jeu entre couteaux dans broyeurs

(30) Priorität: 06.09.1999 DE 19942399
(43) Veröffentlichungstag der Anmeldung: 07.03.2001
(73) Patentinhaber: Case Harvesting Systems GmbH, 01844 Neustadt (DE)
(72) Erfinder: Heinrich, André, 02708 Löbau (DE); Kaiser, Thomas, 01723 Kesselsdorf (DE); Grimsel, Matthias, 01277 Dresden (DE); Schulze, Lars-Peter, 01309 Dresden (DE)
(74) Vertreter: Müller, Lutz

(56) Entgegenhaltungen:
- EP-A- 0 291 216
- EP-A- 0 649 591
- DE-A- 3 010 416
- DE-A- 19 633 290
- FR-A- 2 537 832
- US-A- 4 198 006
- US-A- 4 335 569
- US-A- 4 479 346

## Beschreibung

Die Erfindung betrifft ein Verfahren und eine Vorrichtung zum Einstellen des Schneidspaltes an Häckslern zur Verarbeitung landwirtschaftlicher Erntegüter, forstwirtschaftlicher Kulturen sowie für sogenannte nachwachsende Rohstoffe, mit den Merkmalen nach den Oberbegriffen der Patentansprüche 1 und 9.

Derartige Häcksler befinden sich vorzugsweise als Arbeitsaggregat in gezogenen oder selbstfahrenden Feldhäckslern, stationären Häckselmaschinen oder als Zusatzbaugruppe in anderen landwirtschaftlichen Erntemaschinen, wie beispielsweise in Mähdreschern, zum Zerkleinern des ausgedroschenen Strohs. Sie weisen eine rotierende Häckseltrommel mit an deren Umfang schrauben- bzw. keilförmig angeordneten oder aus kurzen Segmenten bestehende Häckselmesser auf. Diese wirken mit einer quer zur Fahrtrichtung zeigenden und horizontal ausgerichteten Gegenschneide zusammen, die beidseitig nahe der Häckseltrommel am Häckseltrommelgehäuse befestigt ist, so daß das Häckselgut über die Gegenschneide den Häckselmessern zugeführt und durch deren Zusammenwirken in kleine Stücke geschnitten wird.

Mit fortlaufendem Einsatz werden jedoch die Häckselmesser stumpf, so daß sie von einer in den Häcksler integrierten Schleifeinrichtung relativ häufig nachgeschliffen werden müssen. Da für das Einhalten der gewünschten Häcksellänge und zur Minimierung der Antriebsleistung für die Häckseltrommel neben scharfen Häckselmessern ein sehr enger Schneidspalt notwendig ist, muß nach jedem Nachschleifen die Einstellung der Gegenschneide zu den Häckselmessern neu vorgenommen werden.So ist es beispielsweise bei selbstfahrenden Feldhäckslern mit einem hohen Durchsatz an Häckselgut üblich, diesen Einstellvorgang durch den Bediener vom Fahrerstand aus vorzunehmen.

Vorrichtungen zum Einstellen des Schneidspaltes an Häckslern sind bereits in einigen Ausführungsvarianten bekannt geworden, die im Anwendungsfall an Feldhäckslern nun näher erläutert werden sollen.

Es ist aus der DE 29 26 538 C2 bekannt, die Gegenschneide mit einem beidseitig an ihr und und am Häckseltrommelgehäuse angeordneten Einstellmechanismus auf die mit Häckselmessern besetzte rotierende Häckseltrommel zu und von dieser weg zu bewegen. Das ist völlig unabhängig voneinander auf beiden Seiten möglich. Zur Verstellung selbst dienen mit Schraubspindeln verbundene Elektromotoren, die nach beendetem Schleifen der Häckselmesser zuerst die eine Seite der Gegenschneide auf Knopfdruck des Bedieners an die Häckselmesser bis zu deren Kontakt heranstellen. Der Zustellvorgang wird dann vom Bediener manuell unterbrochen, wenn er aufgrund des Kontaktes ein Ticken hört. Danach wird durch einen Drehrichtungswechsel der Elektromotoren die Gegenschneide zum Erhalt eines Schneidspaltes ein Stück von den Häckselmessern weg bewegt. Die gleichen Bewegungsabläufe werden mit der anderen Seite der Gegenschneide wiederholt. Wenn die Gegenschneide einmal aus einer extremen Schiefstellung zu den Häckselmessern eingestellt wird, muß zum Erreichen eines gleichmäßigen Schneidspaltes über die gesamte Länge der Gegenschneide der Zu- und Rückstellvorgang der Gegenschneide auf beiden Seiten mehrfach wiederholt werden. Nachteilig an dieser Einstellvorrichtung ist einmal deren Ungenauigkeit durch die undefinierte Reaktionszeit des Bedieners. Zum anderen ist dieser Einstellvorgang zeitraubend und er erfordert, daß der Bediener den Fahrerstand verläßt. Schließlich kann ein Bedienungsfehler zur Zerstörung des gesamten Häckslers führen.

Mit der EP 0 291 216 B1 ist eine weitere Vorrichtung zum Einstellen des Schneidspaltes zwischen der Gegenschneide und den Häckselmessern bekannt geworden, bei der der Einstellvorgang weitestgehend automatisiert wurde. Dazu werden den Kontakt zwischen der Gegenschneide und den Häckselmessern signalisierende Meßeinrichtungen eingesetzt, was in diesem Fall auf Schwingungen ansprechende Klopfsensoren sind. Je ein Klopfsensor ist hierfür im Bereich der Gegenschneide auf deren linken und rechten Seite angebracht, deren Signale einem Mikroprozessor und einer Steuervorrichtung zugeleitet werden. Diese Einrichtungen sorgen dafür, daß ab einer bestimmten Größe der Signale der Zustellvorgang der Gegenschneide auf der einen Seite abgebrochen und danach auf der anderen Seite eingeleitet wird. Nach jedem Kontakt stellt die Steuervorrichtung durch Umsteuern der Drehrichtung der Elektromotoren die Gegenschneide ein Stück weg von den Häckselmessern, was so lange wiederholt wird, bis die Gegenschneide den gewünschten Schneidspalt zu den Häckselmessern aufweist und sie sich in einer parallelen Position zu diesen befindet.

Obwohl der Einstellvorgang automatisch abläuft, haften dieser Einstellvorrichtung dennoch einige Nachteile an. Das ist einmal deren Funktionsunsicherheit, weil mechanische bzw. akustische Störsignale aus dem Umfeld des Häckslers, zum Beispiel vom Antriebssystem herrührender Körperschall und sonstige Betriebsstörpegel, die Signalaufnahme aus dem Kontakt zwischen der Gegenschneide und den Häckselmessem stören. Um diesen Nachteil in Grenzen zu halten, sind Tiefpaßfilter zur Signalaufbereitung nötig, die jedoch die Herstellungskosten für die Einstellvorrichtung erhöhen. Desweiteren sind Klopfsensoren an sich störanfällig, was sich durch deren ungünstigen Ort der Anbringung im mit Erntegut, Feuchtigkeit und Schmutz am meisten belasteten Bereich noch negativer auswirkt. Da es zur Erzeugung eines vom Klopfsensor erkennbaren Signals zu einem ziemlich heftigen Kontakt zwischen der Gegenschneide und den Häckselmessern kommen muß, unterliegen diese dadurch einem unnötig hohen Verschleiß. Dieses nahe Heranstellen der Gegenschneide führt logischerweise zu einem längeren Rückstellweg und darüber hinaus zu einer Erhöhung der Anzahl der Zu- und Rückstellvorgänge der Gegenschneide bis zu ihrer endgültig parallen Position zu den Häckselmessern, wodurch der Einstellvorgang relativ lange dauert.

Der Vollständigkeit halber ist noch auf die Einstellvorrichtung des Schneidspaltes nach der DE 43 35 786 A1 hinzuweisen, die prinzipiell gleich wie die nach der EP 0 291 216 B1 aufgebaut ist. Der Unterschied liegt lediglich in einer verbesserten Signalaufbereitung, wobei die Signale der Klopfsensoren jeweils einer Tiefpaßschaltung und zusätzlich einer nachgeschalteten Schwellwertschaltung zugeführt werden, so daß an deren Ausgängen die Impulssignale entstehen. In einer Ausführung sind die beiden Impulssignale in einem ODER-Gatter verknüpft. Dieses gemeinsame Impulssignal wird dann einem Zähler an dessen Zähleingang und einem retriggerbaren Zeitglied sowie der Steuervorrichtung zugeführt. Alternativ werden die beiden Impulssignale in einem Antivalenzgatter verknüpft und so ebenfalls dem Zähler sowie der Steuervorrichtung zugeführt. Nachteilig an dieser Einstellvorrichtung ist, daß die bei der EP 0 291 216 B1 bereits bemängelte Funktionsunsicherheit lediglich etwas abgeschwächt wird und die übrigen Nachteile vollinhaltlich bestehen bleiben. Als weiterer Nachteil kommt hinzu, daß die beschriebenen Maßnahmen zur Funktionsverbesserung die Herstellungskosten noch weiter erhöhen.

Schließlich ist noch auf die Einstellvorrichtung des Schneidspaltes nach der FR-A-2 537 832 hinzuweisen, wo zwischen den Häckselmessem und einem in die Gegenschneide eingebetteten Leitungsdraht eine Hochspannung anliegt. Das vordere Ende des Leitungsdrahtes befindet sich im Bereich der Schneidkante der Gegenschneide und er selbst ist mittels Epoxidharz und einer Schutzhülle gegenüber der Gegenschneide elektrisch isoliert. Wenn nun der Schneidspalt durch das Heranstellen der Gegenschneide an die Häckselmesser seinen optimalen Wert erreicht hat, durchschlägt der Strom durch Funkenüberschläge diese Distanz. In der dazu gehörenden Schaltungsanordnung befindet sich ein Funkendetektor mit einem Spannungsvergleicher, womit der Spannungsabfall beim Funkenschlag festgestellt wird. In dem Fall erzeugt der Funkendetektor einen Ausgangsimpuls und leitet diesen an einen Impulszähler weiter. Das Ausgangssignal des Impulszählers wiederum dient zum Anhalten des Motors des Einstellmechanismus, der aus zwei an den Enden der Gegenschneide angreifenden Teilen besteht, die jedoch über einen Motor und weitere Antriebsteile gemeinsam angetrieben werden.

Dieser Einstellvorrichtung haften einige wesentliche Mängel an. Das wäre einmal die Ungenauigkeit in der Übereinstimmung des so ermittelten mit dem tatsächlichen Schneidspalt, da mit fortlaufendem Verschleiß der Gegenschneide keinesfalls gewährleistet ist, daß sich immer das vordere Ende des Leitungsdrahtes auch auf gleicher Höhe wie die Schneidkante der Gegenschneide befindet. Die Feststellung des Schneidspaltes nur an einem Punkt ist über die Breite der Gegenschneide gesehen ebenfalls mit großen Ungenauigkeiten verbunden, weil das eine absolut genaue Parallelverstellung des Einstellmechanismus voraussetzt, was in der Praxis einfach nicht zu verwirklichen ist. Deshalb besitzen heute alle Feldhäcksler ausnahmslos separate Einstellmechanismen für jede Seite der Gegenschneide. Außerdem birgt die Feststellung des Schneidspaltes nur in einem Punkt die Gefahr der völligen Unbrauchbarkeit der auf diese Weise ermittelten Werte in sich, weil gerade in diesem Bereich durch örtliche Beschädigungen der Gegenschneide und der Häckselmesser sowie infolge von extremen Verschmutzungen oder unerwünschter Fremdkörpern die Distanz zwischen dem vorderen Ende des Leitungsdrahtes und den eventuell ausgebrochenen Häckselmessern überhaupt nicht mehr dem eigentlichen Schneidspalt entspricht. Letztendlich führt das Vorhandensein nur einer einzigen Stelle zur Überwachung des Schneidspaltes bei deren Defekt zwangsläufig zum Totalausfall, so daß alle genannten Nachteile zusammengenommen ganz sicher der Grund dafür sind, daß eine derartige Einstellvorrichtung für den Schneidspalt niemals praxiswirksam geworden ist.

Deshalb liegt der Erfindung die Aufgabe zugrunde, ein Verfahren und eine Vorrichtung zum Einstellen des Schneidspaltes an Häckslern zu schaffen, die mit hoher Funktionssicherheit bereits die Annäherung der Gegenschneide an die Häckselmesser einer Häckseltrommel signalisiert, die störunanfällig und verschleißfrei arbeitet, deren Herstellungskosten gering sind, die während des Einstellvorganges an der Gegenschneide und den Häckselmessern keinen Verschleiß verursacht und die eine Einstellung des Schneidspaltes in kurzer Zeit ermöglicht.

Diese Aufgabe wird durch den Gegenstand des Patentanspruches 1 und die Verfahrensweise nach dem Patentanspruch 9 gelöst, wobei in den darauf rückbezogenen Unteransprüchen Merkmale aufgeführt sind, die die Erfindung in vorteilhafter Weise weiterentwickeln.

Durch die elektrische Isolierung wenigstens der Gegenschneide gegenüber den übrigen Bauteilen des Häckselaggregates, zu denen zumindest die Häckselmesser gehören, und das Anlegen einer Hochspannung zwischen diesen mittels einer elektrischen Verbindung stehen sich die Gegenschneide und die Häckselmesser als Pole im Abstand des Schneidspaltes gegenüber. Solange der Schneidspalt entsprechend der ausgewählten Hochspannung groß genug ist, baut sich zwischen diesen Polen lediglich ein elektrisches Feld auf. Wird die Gegenschneide auf einer Seite mittels eines Einstellmechanismus auf die rotierenden Häckselmesser zugestellt, entstehen zuerst Funkenüberschläge zwischen der Gegenschneide und einzelnen Häckselmessern. Nach einer weiteren Verringerung des Schneidspaltes kommt es bald zu Funkenüberschlägen unter Einbeziehung jedes Häckselmessers, wobei sie sich auf das äußere Ende der Häckselmesser infolge des Kanteneffektes konzentrieren, weil das elektrische Feld an der Schneidkante des Häckselmessers an dieser Stelle am stärksten ausgebildet ist. Da diese Funkenüberschläge mit einem Stromfluß verbunden sind, bietet es sich an, deren Stromstärke mit einem Strommesser zu erfassen, der durch seine funktionelle Wirkverbindung mit dem Einstellmechanismus den Zustellvorgang der Gegenschneide in dem Augenblick stoppt, wenn jedes Häckselmesser auf dieser Seite in die Funkenüberschläge einbezogen ist. Vorsorglich wird darauf verwiesen, daß auch alle anderen Möglichkeiten der Erfassung der Funkenüberschläge im Rahmen der Erfindung liegen, die dem Fachmann geläufig sind. Beispielsweise fällt auch die Spannungsmessung darunter, die im Falle eines Stromflusses über einem Meßwiderstand abfällt.

Nachdem der Zustellvorgang auf der ersten Seite gestoppt wurde, wird er auf der anderen Seite eingeleitet. Wenn dann auch jedes Häckselmesser auf dieser Seite in die Funkenüberschläge einbezogen ist, wird auch hier der Zustellvorgang beendet. Durch eine einmalig durchzuführende Auswahl des richtigen Betrages der anzulegenden Hochspannung, was sich nach dem konstruktiven Aufbau der Häckseltrommel und des Häckselaggregates insgesamt richtet, wird der optimale Schneidspalt mit nur einem Zustellvorgang auf jeder Seite erreicht. Dazu bietet es sich an, mittels einer geeigneten Regeleinrichtung die Spannung der Hochspannungsquelle beliebig verändern zu können.

Weil es mit diesem Verfahren zum Einstellen des Schneidspaltes nicht zum mechanischen Kontakt zwischen der Gegenschneide und den Häckselmessem kommt, entfällt der bisher übliche Rückstellvorgang.

Für die elektrische Isolierung der Gegenschneide gegenüber wenigstens den Häckselmessern hat es sich einmal als zweckmäßig erwiesen, den Gegenschneidenträger an der Kontaktfläche zur Gegenschneide mit einer elektrisch nichtleitenden Keramikschicht zu versehen, weil ansonsten das Verschleißteil Gegenschneide damit versehen werden müßte und demzufolge diese Beschichtung mehrfach notwendig wäre.

Eine weitere vorteilhafte Möglichkeit der elektrischen Isolierung der Gegenschneide gegenüber wenigstens den Häckselmessern besteht darin, die gesamte Häckseltrommel gegenüber dem Häckseltrommelgehäuse zu isolieren, indem beispielsweise deren Lager in Isoliermaterial aufgenommen sind. Vorsorglich wird an dieser Stelle darauf verwiesen, daß der Rahmen der Erfindung auch dann nicht verlassen wird, wenn die Stelle der elektrischen Isolierung an einer anderen Stelle als den beiden genannten liegt. Entscheidend ist allein, daß sich letztendlich die Gegenschneide und die Häckselmesser als elektrisch voneinander isolierte Pole gegenüberstehen.

Für die Ausbildung eines starken elektrischen Feldes hat es sich bewährt, als Hochspannungsquelle eine Gleispannungsquelle einzusetzen, da das nicht wie beim Eisatz einer Wechselspannungsquelle ständig auf- und abgebaut wird.

Es hat sich auch als zweckmäßig erwiesen, den die Funkenüberschläge registrierenden Strommesser über eine Auswerteeinheit mit dem Einstellmechanismus in funktionelle Wirkverbindung zu bringen, da nur diese exakt in der Lage ist, den tatsächlichen Funkensprung unter Einbeziehung aller Häckselmesser festzustellen und im richtigen Augenblick den Zustellvorgang zu beenden.

Außerdem bietet es sich an, in der Auswerteeinheit eine Rechnereinheit zu installieren, die in der Zeitspanne der Funkenüberschläge unter Einbeziehung jedes Häckselmesser in der Lage ist, mit der vorher eingegebenen Anzahl der Häckselmesser die augenblickliche Drehzahl der Häckseltrommel zu errechnen. Damit der Einstellvorgang des Schneidspaltes nicht zu lange dauert, empfiehlt sich als Ausgangswert ein Abstand der Gegenschneide von den Häckselmessern in der Größenordnung von 0,5 Millimetern. Das kann aber auch entsprechend des Aufbaues des Häckselaggregates ein anderer Wert sein. Entscheidend ist, daß die Funkenüberschläge noch nicht oder erst nur vereinzelt eingesetzt haben. Bezüglich der anzulegenden Hochspannung hat es sich bewährt, beim Zustellvorgang der Gegenschneide auf der ersten Seite eine höhere Spannung anzulegen als auf der zweiten, die bei selbstfahrenden Feldhäckslern der oberen Leistungsklasse im Bereich von 1 bis 1,5 Kilovolt liegt. Das ist zur Einstellung eines gleich großen Schneidspaltes über die gesamte Länge der Gegenschneide notwendig, weil die zuerst eingestellte Seite der Gegenschneide beim Zustellen der zweiten Seite ebenfalls noch ein Stück herangestellt wird. Für die zweite Seite empfiehlt sich ein Hochspannungsbereich von 0,25 bis 0,75 Kilovolt.

Das beste Einstellergebnis ergibt sich logischerweise beim Vorhandensein geschliffener Häckselmesser und einer scharfkantigen Gegenschneide, was jedoch keine Vorbedingung für eine einwandfreie Funktion der erfindungsgemäßen Vorrichtung bzw. Verfahrens ist.

Der Vollständigkeit halber soll noch darauf hingewiesen werden, daß die Erfindung sowohl bei stillstehender als auch bei rotierender Häckseltrommel mit Erfolg anwendbar ist.

Damit wären als Vorteile der Erfindung zu nennen, daß damit die Einstellung des Schneidspaltes an Häckslern mit einer hohen Funktionssicherheit bereits bei der Annäherung der Gegenschneide an die Häckselmesser möglich ist. Da es dabei zu keiner Berührung zwischen der Gegenschneide und den Häckselmessern kommt, arbeitet sie auch völlig verschleißfrei und sie ist deshalb auch störunanfällig. Sie verursacht auch während des Einstellvorganges aus vorstehend genanntem Grund keinen Verschleiß an der Gegenschneide und den Häckselmessern. Darüber hinaus geht der Einstellvorgang schnell, weil es nur noch eine Zustellbewegung und keine Rückstellbewegung mehr gibt.

Die Erfindung soll nun anhand eines Ausführungsbeispieles näher erläutert werden, wobei die einzelnen Figuren zeigen:
- Fig. 1:: eine schematische Seitenansicht des Häckselaggregates eines Feldhäckslers mit einem symbolischen Schaltkreis einer elektrischen Verbindung zwischen den Häckselmessern und der Gegenschneide

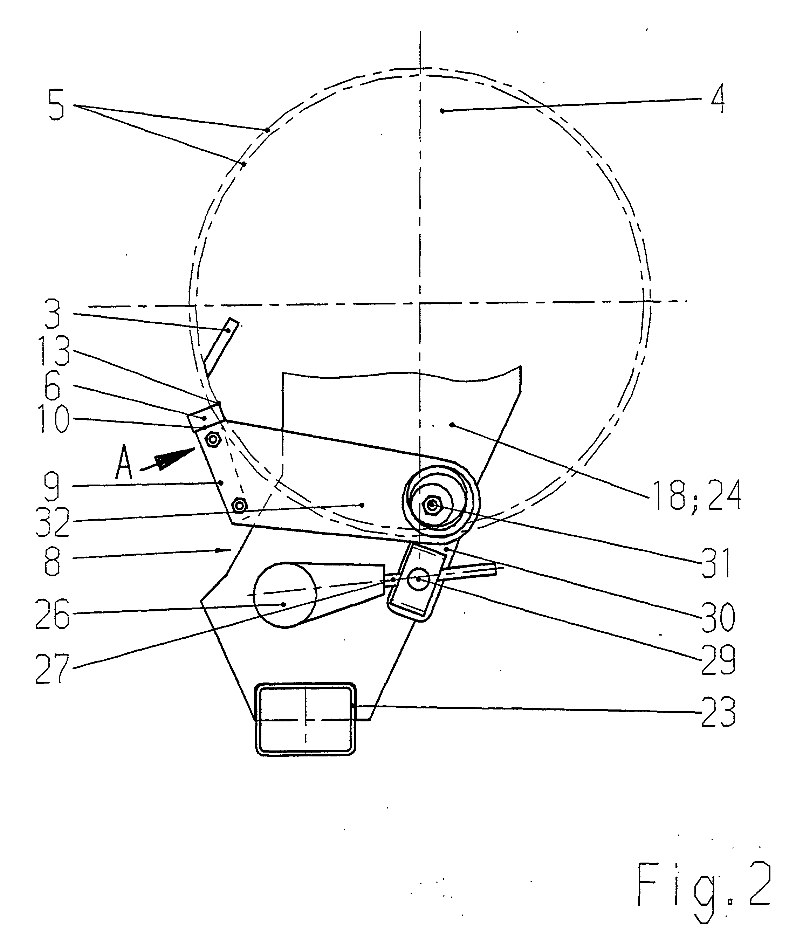

- Fig. 2:: eine Seitenansicht auf die Vorrichtung zum Einstellen des Schneidspaltes zwischen der Gegenschneide und den Häckselmessern

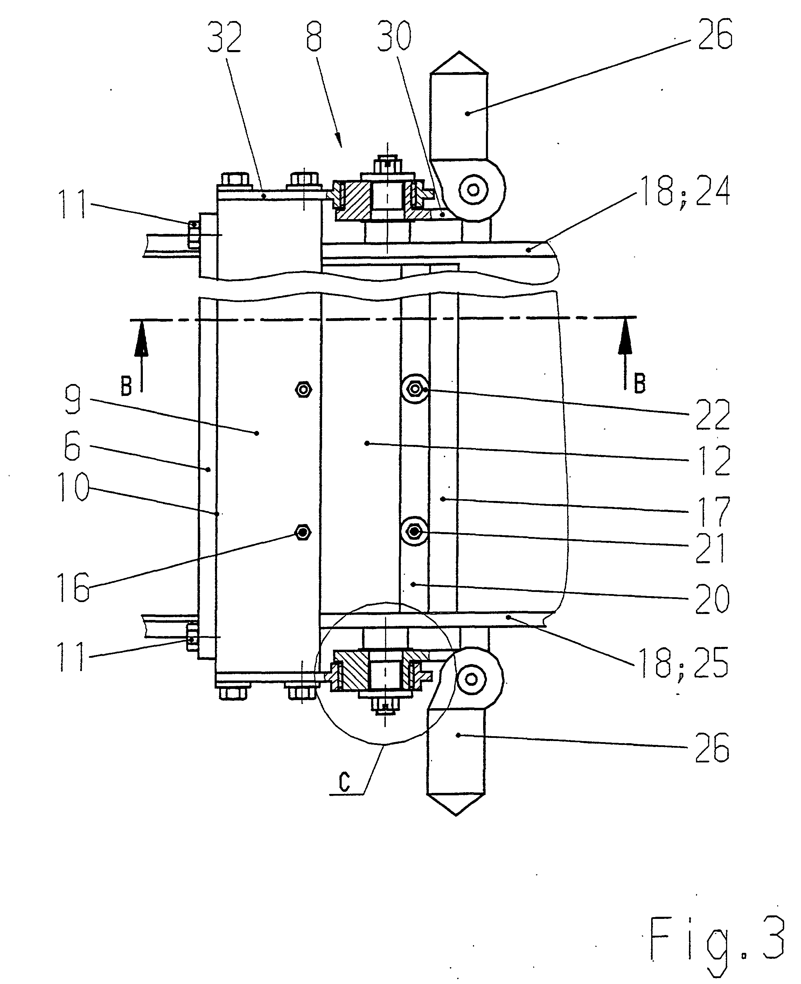

- Fig. 3:: eine Ansicht A nach Fig. 2

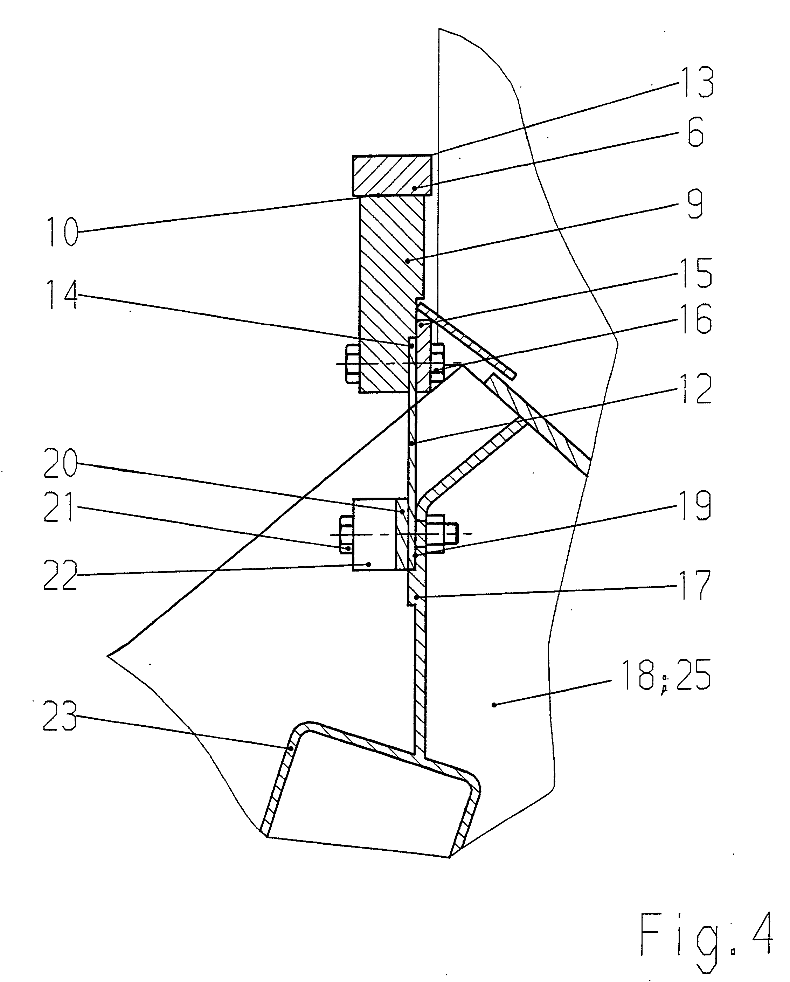

- Fig. 4:: ein Schnitt B-B nach Fig. 3

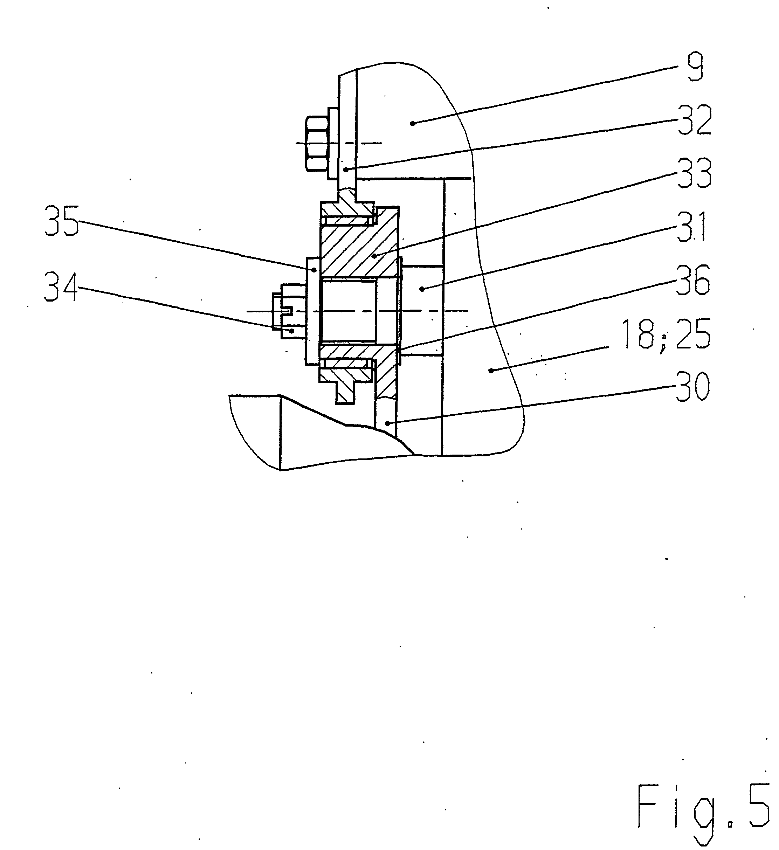

- Fig. 5:: eine Einzelheit C nach Fig. 3
- Fig. 6:: ein aufgezeichneter Stromfluß infolge von Funkenüberschlägen während des Zustellvorganges der Gegenschneide auf die Häckselmesser
- Fig. 7:: ein vergrößerter Ausschnitt aus Fig. 6.

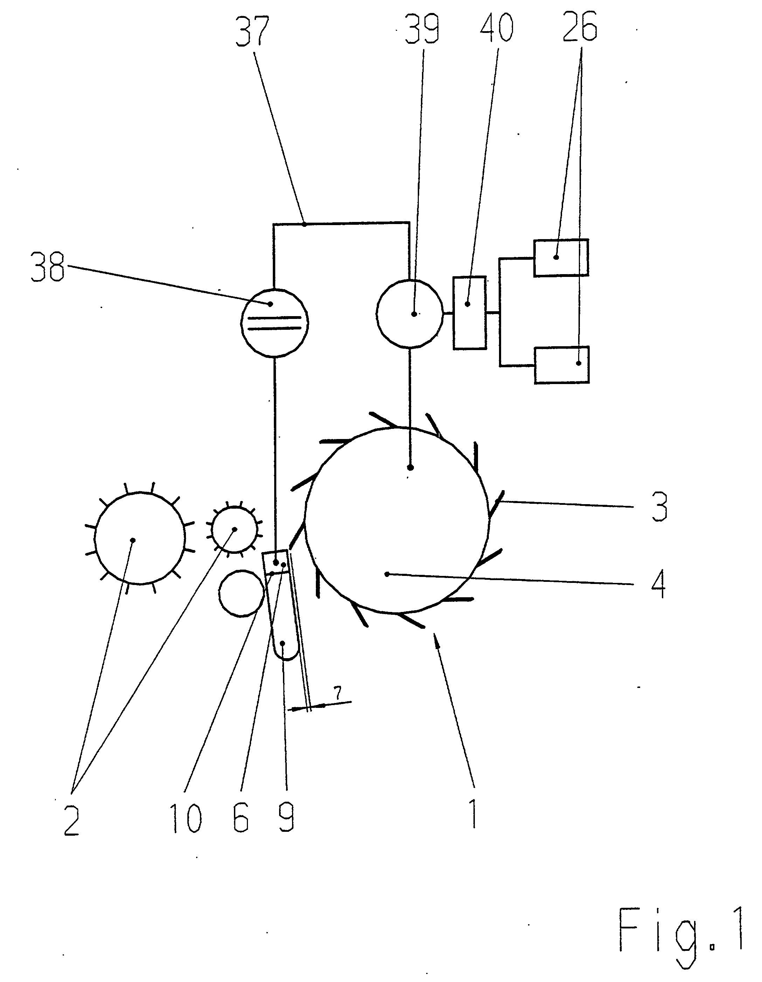

In Figur 1 sind die wichtigsten Bauteile des Häckselaggregates 1 eines Feldhäckslers zu sehen, das aus in Fahrtrichtung gesehen vom liegenden und gegensinnig rotierenden Einzugswalzen 2 besteht, denen die mit Häckselmessern 3 bestückte Häckseltrommel 4 nachgeordnet ist. Bei der Rotation der Häckseltrommel 4 beschreiben die Schneidkanten der Häckselmesser 3 den Rotationskreis 5 der Häckseltrommel 4. Zwischen den Einzugswalzen 2 und der Häckseltrommel 4 befindet sich die Gegenschneide 6 in einer horizontalen Ausrichtung zum Rotationskreis 5 der Häckseltrommel 4, wobei zwischen ihr und den Häckselmessern 3 ein gleichmäßiger Schneidspalt 7 über die gesamte Breite der Häckseltrommel 4 eingestellt ist.

Zum Einstellen eines minimalen Schneidspaltes 7 für unterschiedlich große Rotationskreise 5, beispielsweise infolge des Nachschleifens der Häckselmesser 3 bzw. der Austattung der Häckseltrommel 4 mit neuen Häckselmessern 3, ist die Gegenschneide 6 mit Hilfe eines später zu erläuternden Einstellmechanismus 8 in der örtlichen Lage innerhalb des Häckselaggregates 1 veränderbar.

Im Sinne einer vibrationsfreien Befestigung der Gegenschneide 6 innerhalb des Häckselaggregates 1 liegt sie mit ihrer ganzen Länge auf einem stabil ausgebildeten Gegenschneidenträger 9 auf, dessen Kontaktfläche mit der Gegenschneide 6 mit einer elektrisch nichtleitenden Keramikschicht 10 versehen ist. Die Gegenschneide 6 und der Gegenschneidenträger 9 sind an ihren äußeren Enden und in der Mitte mittels Paßschrauben 11 form- und kraftschlüssig miteinander verbunden, wobei durch geeignete konstruktive Maßnahmen die elektrische Isolierung zwischen der Gegenschneide 6 und dem Gegenschneidenträger 9 erhalten bleibt.

Der Gegenschneidenträger 9 ist an seiner Unterseite mit dem oberen Ende eines annähernd die lichte Weite des Häckselaggregates 1 aufweisenden Bleches 12 in Form einer Einspannung verbunden. Dieses Blech 12 erstreckt sich über seine hohe Kante gesehen in Richtung der auf die Schneidkante 13 der Gegenschneide 6 einwirkenden Schnittkraft. Die Einspannung wird dabei durch eine im Gegenschneidenträger 9 vorgesehene Ausnehmung 14 gebildet, in der das obere Ende des Bleches 12 bündig aufgenommen und mittels einer Klemmleiste 15 und mehreren Schraubverbindungen 16 am Gegenschneidenträger 9 befestigt ist. Das untere Ende des Bleches 12 ist ebenfalls in Form einer Einspannung mit einer Querversteifung 17 des Häckseltrommelgehäuses 18 verbunden. Auch hier wird die Einspannung durch eine Ausnehmung 19 im oberen Abschnitt der Querversteifung 17 realisiert, in der das untere Ende des Bleches 12 bündig aufgenommen und mittels einer Klemmleiste 20 über Schraubverbindungen 21 mit Hülsen 22 an der Querversteifung 17 befestigt ist. Das untere Ende der Querversteifung 17 stützt sich auf einem quer ausgerichteten Träger 23 ab, der zwischen der linken Seitenwand 24 und der rechten Seitenwand 25 des Häckseltrommelgehäuses 18 eingeschweißt ist.

Der zur Einstellung des Schneidspaltes 7 dienende Einstellmechanismus 8 besteht aus links und rechts neben den äußeren Enden des Gegenschneidenträgers 9 angebrachten Bauteilen gleichen Aufbaues, die lediglich spiegelbildlich angeordnet sind. Dazu gehören gestellfest und schwenkbeweglich aufgehangene elektrische Stellmotoren 26, die antriebsmäßig mit dem einen Ende je einer Schraubspindel 27 verbunden sind. Das andere Ende der Schraubspindeln 27 ist mit einem am Häckseltrommelgehäuse 18 gelagerten Hebelmechanismus 28 über einen daran gelenkig angebrachten Gewindebolzen 29 verbunden. Das dem Gewindebolzen 29 gegenüberliegende Ende des Hebelmechanismus 28 ist an den Gegenschneidenträger 9 angeschraubt. Der Hebelmechanismus 28 besteht im Detail aus einem Schwenkhebel 30, der einenends vorstehend erwähnten Gewindebolzen 29 trägt und anderenends um einen an der linken Seitenwand 24 bzw. der rechten Seitenwand 25 befestigten Lagerbolzen 31 drehbar gelagert ist. Am Schwenkhebel 30 ist in einer Anordnung exzentrisch um den Lagerbolzen 31 ein Seitenarm 32 drehbar aufgehangen, dessen anderes Ende die Verbindung zum Gegenschneidenträger 9 herstellt. Die exzentrische Nabe 33 des Schwenkhebels 30 ist mittels einer Kronenmutter 34 und einer starken Scheibe 35 gegen einen Bund 36 des Lagerbolzens 31 in axialer Richtung anpreßbar.

Zwischen der Gegenschneide 6 und den übrigen elektrisch von ihr isolierten Bauteilen des Häckselaggregates 1 besteht eine elektrische Verbindung 37, in der sich eine Hochspannungsquelle 38 und ein Strommesser 39 befinden. Der Strommesser 39 steht über eine Auswerteeinheit 40 mit den elektrischen Stellmotoren 26 des Einstellmechanismus 8 in funktioneller Wirkverbindung.

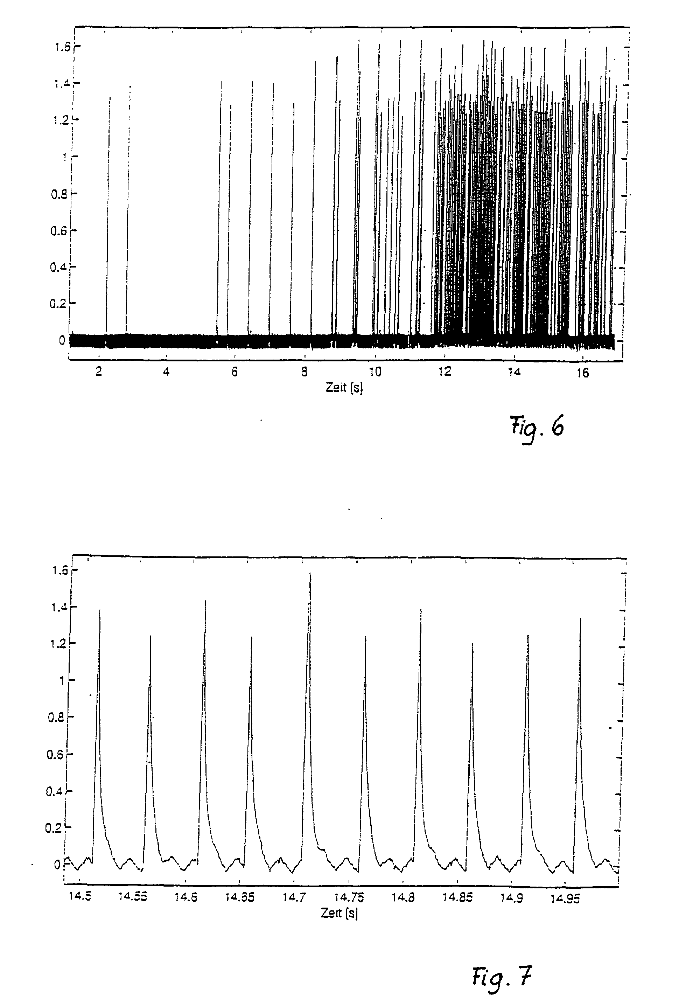

In Figur 6 ist der beispielsweise auf einem Bildschirm zu sehende Stromfluß infolge von Funkenüberschlägen zwischen den Häckselmessern 3 und der Gegenschneide 6 während des Zustellvorganges der Gegenschneide 6 aufgezeichnet, wobei in Figur 7 der Zeitabschnitt aus Figur 6 vergrößert dargestellt ist, in dem zwischen jedem Häckselmesser 3 und der Gegenschneide 6 Funkenüberschläge da sind.

### Bezugszeichenaufstellung

- 1: Häckselaggregat
- 2: Einzugswalzen
- 3: Häckselmesser
- 4: Häckseltrommel
- 5: Rotationskreis
- 6: Gegenschneide
- 7: Schneidspalt
- 8: Einstellmechanismus
- 9: Gegenschneidenträger
- 10: Keramikschicht
- 11: Paßschraube
- 12: Blech
- 13: Schneidkante
- 14: Ausnehmung
- 15: Klemmleiste
- 16: Schraubverbindung
- 17: Querversteifung
- 18: Häckseltrommelgehäuse
- 19: Ausnehmung
- 20: Klemmleiste
- 21: Schraubverbindung
- 22: Hülse
- 23: Träger
- 24: linke Seitenwand
- 25: rechte Seitenwand
- 26: Stellmotor
- 27: Schraubspindel
- 28: Hebelmechanismus
- 29: Gewindebolzen
- 30: Schwenkhebel
- 31: Lagerbolzen
- 32: Seitenarm
- 33: Nabe
- 34: Kronenmutter
- 35: Scheibe
- 36: Bund
- 37: elektrische Verbindung
- 38: Hochspannungsquelle
- 39: Strommesser
- 40: Auswerteeinheit

## Patentansprüche

1. Vorrichtung zum Einstellen des Schneidspaltes an Häckslern, insbesondere Feldhäckslern, mit einem Häckselaggregat (1):
- dessen Häckseltrommel (4) mit Häckselmessem (3) besetzt ist,
- dessen Gegenschneide (6) einen Schneidspalt (7) zum Rotationskreis (5) der Häckselmesser (3) aufweist,
- an dem sich ein beidseitig unabhängig voneinander zu betätigender Einstellmechanismus (8) für die Veränderung des Schneidspaltes (7) befindet,
- das mit einer elektrische Funkenüberschläge erzeugenden Einrichtung beim Erreichen des optimalen Schneidspaltes (7) ausgestattet ist, die mit dem Einstellmechanismus (8) in funktioneller Wirkverbindung steht,
- wenigstens die Gegenschneide (6) gegenüber den übrigen Bauteilen des Häckselaggregates (1), zu denen zumindest die Häckselmesser (3) gehören, elektrisch isoliert ist,
- zwischen der Gegenschneide (6) bzw. den die Gegenschneide (6) enthaltenden elektrisch isolierten Teilen und den übrigen Bauteilen des Häckselaggregates (1) eine elektrische Verbindung (37) besteht, in der sich eine Hochspannungsquelle (38) und ein Strommesser(39) befinden,
- die Spannung der Hochspannungsquelle (38) wenigstens so hoch ist, daß bereits vor der Berührung der Häckselmesser (3) und der Gegenschneide (6) ein Funkenüberschlag vorhanden ist,
- der Strommesser (39) mit dem Einstellmechanismus (8) für den Schneidspalt (7) in funktioneller Wirkverbindung steht.

2. Vorrichtung nach Anspruch 1, **dadurch gekennzeichnet, daß** die mit Häckselmessern (3) besetzte Häckseltrommel (4) gegenüber dem Häckseltrommelgehäuse (18), in dem die Gegenschneide (6) angeordnet ist, elektrisch isoliert ist.

3. Vorrichtung nach Anspruch 1, **dadurch gekennzeichnet, daß** sich zwischen der Gegenschneide (6) und dem Gegenschneidenträger (9) eine elektrisch nichtleitende Keramikschicht (10) befindet.

4. Vorrichtung nach den Ansprüchen 1 bis 3, **dadurch gekennzeichnet, daß** die Hochspannungsquelle (38) eine Gleichspannungsquelle ist.

5. Vorrichtung nach den Ansprüchen 1 bis 4, **dadurch gekennzeichnet, daß** die Spannung der Hochspannungsquelle (38) beliebig veränderbar ist.

6. Vorrichtung nach den Ansprüchen 1 bis 5, **dadurch gekennzeichnet, daß** der Strommesser (39) über eine Auswerteeinheit (40) mit dem Einstellmechanismus (8) für den Schneidspalt (7) in funktioneller Wirkverbindung steht.

7. Vorrichtung nach einem oder mehreren der Ansprüche 1 bis 6, **dadurch gekennzeichnet, daß** die Auswerteeinheit (40) als eine die Stromstärke als auch deren zeitlichen Verlauf beim Funkenüberschlag zwischen der Gegenschneide (6) und den Häckselmessern (3) registrierende Einrichtung ausgebildet ist.

8. Vorrichtung nach einem oder mehreren der Ansprüche 1 bis 7, **dadurch gekennzeichnet, daß** in der Auswerteeinheit (40) eine Rechnereinheit vorgesehen ist, die unter Berücksichtigung der Funkenüberschläge zwischen jedem Häckselmesser (3) und der Gegenschneide (6) und der Anzahl der sich an der Häckseltrommel (4) befindenden Häckselmesser (3) die Drehzahl der Häckseltrommel (4) errechnet.

9. Verfahren zum Einstellen des Schneidspaltes an Häckslern, insbesondere Feldhäckslern, mit einem Häckselaggregat (1),
- dessen Häckseltrommel (4) mit Häckselmessern (3) besetzt ist,
- dessen Gegenschneide (6) einen Schneidspalt (7) zum Rotationskreis (5) der Häckselmesser (3) aufweist,
- an dem sich ein Einstellmechanismus (8) mit Stellmotoren (26) für die Veränderung des Schneidspaltes (7) befindet, wobei diese Stellmotoren (26) mit den äußeren Enden der Gegenschneide (6) in funktioneller Wirkverbindung stehen und wechselweise unabhängig voneinander betätigbar sind,
- das mit einer elektrische Funkenüberschläge erzeugenden Einrichtung beim Erreichen des optimalen Schneidspaltes (7) ausgestattet ist, die mit dem Einstellmechanismus (8) in funktioneller Wirkverbindung steht,
- wenigstens die Gegenschneide (6) gegenüber den übrigen Bauteilen des Häckselaggregates (1), zu denen zumindest die Häckselmesser (3) gehören, elektrisch isoliert wird,
- zwischen der Gegenschneide (6) bzw. den die Gegenschneide (6) enthaltenden elektrisch isolierten Teilen und den übrigen Bauteilen des Häckselaggregates (1) eine elektrische Verbindung (37) hergestellt wird, in der sich eine Hochspannungsquelle (38) und ein Strommesser (39) befinden,
- der Schneidspalt (7) zum Beginn des Einstellvorganges größer als der optimale Wert des Schneidspaltes (7)ist, bei dem noch kein Funkenüberschlag zwischen der Gegenschneide (6) und den Häckselmessern (3) erfolgt,
- der Schneidspalt (7) auf der einen Seite der Gegenschneide (6) durch den sich auf dieser Seite befindenden Stellmotor (26) des Einstellmechanismus (8) verkleinert wird, wobei die einsetztenden Funkenüberschläge vom Strommesser (39) registriert und an die Auswerteeinheit (40) weitergeleitet werden,
- mit Erreichen einer Anzahl von Funkenüberschlägen zwischen jedem Häckselmesser (3) und der Gegenschneide (6) auf dieser Seite, was bei vorliegendem optimalem Schneidspalt (7) der Fall ist, die Auswerteeinheit (40) den Zustellvorgang der Gegenschneide (6) auf die Häckselmesser (3) stoppt,
- der Schneidspalt (7) auf der anderen Seite der Gegenschneide (6) durch den sich dort befindenden Stellmotor (26) des Einstellmechanismus (8) verkleinert wird, wobei die einsetztenden Funkenüberschläge vom Strommesser (39) registriert und an die Auswerteeinheit (40) weitergeleitet werden,
- mit Erreichen einer Anzahl von Funkenüberschlägen zwischen jedem Häckselmesser (3) und der Gegenschneide (6) auch auf dieser Seite, was bei vorliegendem optimalen Schneidspalt (7) der Fall ist, die Auswerteeinheit (40) den Zustellvorgang der Gegenschneide (6) auf die Häckselmesser (3) stoppt.

10. Verfahren nach Anspruch 9, **dadurch gekennzeichnet, daß** der Schneidspalt (7) über die gesamte Breite der Häckseltrommel (4) zum Beginn des Einstellvorganges in der Größenordnung von 0,5 Millimeter liegt.

11. Verfahren nach den Ansprüchen 9 und 10, **dadurch gekennzeichnet, daß** die beim zuerst ausgeführten Zustellvorgang der Gegenschneide (6) auf der einen Seite anliegende Hochspannung höher als beim darauffolgenden Zustellvorgang auf der gegenüberliegenden Seite ist.

12. Verfahren nach den Ansprüchen 9 bis 11, **dadurch gekennzeichnet, daß** die beim zuerst ausgeführten Zustellvorgang der Gegenschneide (6) auf der einen Seite anliegende Hochspannung im Bereich von 1 bis 1,5 Kilovolt liegt.

13. Verfahren nach den Ansprüchen 9 bis 12, **dadurch gekennzeichnet, daß** die beim zweiten Zustellvorgang der Gegenschneide (6) auf der anderen Seite anliegende Hochspannung im Bereich von 0,25 bis 0,75 Kilovolt liegt.

14. Verfahren nach den Ansprüchen 9 bis 13, **dadurch gekennzeichnet, daß** das Einstellen des Schneidspaltes (7) zwischen den Häckselmessern (3) und der Gegenschneide (6) nach dem Schleifen der Häckselmesser (3) und mit einer scharfkantigen Gegenschneide (6) vorgenommen wird.

15. Verfahren nach den Ansprüchen 9 bis 14, **dadurch gekennzeichnet, daß** das Einstellen des Schneidspaltes (7) zwischen den Häckselmessern (3) und der Gegenschneide (6) bei stillstehender Häckseltrommel (4) vorgenommen wird.

16. Verfahren nach den Ansprüchen 9 bis 14, **dadurch gekennzeichnet, daß** das Einstellen des Schneidspaltes (7) zwischen den Häckselmessern (3) und der Gegenschneide (7) bei rotierender Häckseltrommel (4) vorgenommen wird.

## Claims

1. A device for adjusting the cutter gap on crop choppers, especially forage harvesters, with a chopper unit (1):
- the chopper cylinder (4) of which is equipped with chopping knives (3),
- the counter-cutter blade (6) of which exhibits a cutter gap (7) towards the rotational circle (5) of the chopping knives (3),
- on which there is on both sides an adjusting mechanism (8) for varying the cutter gap (7) operating independently of each other,
- which is equipped with a device for producing electrical spark discharges on attaining the optimum cutter gap (7), which is functionally connected with the adjusting mechanism (8), where:
- at least the counter-cutter blade (6) is electrically isolated from the remaining components of the chopper unit (1), which includes at least the chopping knife (3),
- between the counter-cutter blade (6) and the electrically isolated parts containing the counter-cutter blade (6) and the remaining components of the chopper unit (1) an electrical connection (37) exists, in which there is situated a high tension source (38) and an ammeter (39),
- the voltage of the high tension source (38) is at least so high, that already before contact of the chopping knife (3) and the counter-cutter blade (6) a spark discharge is present,
- the ammeter (39) is functionally connected to the adjusting mechanism (8) for the cutter gap (7).

2. A device in accordance with claim 1, **characterised in that**, the chopper cylinder (4) equipped with chopping knives (3) is electrically insulated from the chopper cylinder casing (18), in which the counter-cutter blade (6) is arranged.

3. A device in accordance with claim 1, **characterised in that**, between the counter-cutter blade (6) and the counter-cutter blade support (9) there is an electrically non-conducting ceramic layer (10).

4. A device in accordance with claims 1 to 3, **characterised in that**, the high-tension source (38) is a direct current source.

5. A device in accordance with claims 1 to 4, **characterised in that**, the voltage of the high-tension source (38) is variable at will.

6. A device in accordance with claims 1 to 5, **characterised in that**, the ammeter (39) is functionally connected with the adjusting mechanism (8) for the cutter gap (7) via an evaluation unit (40).

7. A device in accordance with one or more of the claims 1 to 6, **characterised in that**, the evaluation unit (40) is designed as a recording unit for the current intensity and also its course with time during the spark discharge between the counter-cutter blade (6) and the chopping knives (3).

8. A device in accordance with one or more of the claims 1 to 7, **characterised in that**, in the evaluation unit (40) a computer unit is envisaged which, taking account of the spark discharges between each chopping knife and the counter-cutter blade (6) and the number of chopping knives (3) located on the chopper cylinder (4), calculates the rotational speed of the chopper cylinder (4).

9. A procedure for adjusting the cutter gap on crop choppers, especially forage harvesters, with a chopper unit (1),
- the chopper cylinder (4) of which is equipped with chopping knives (3),
- the counter cutter blade (6) of which exhibits a cutter gap (7) towards the rotational circle (5) of the chopping knives (3),
- on which there is an adjusting mechanism (8) with adjusting motors (26) for varying the cutter gap (7), where these adjusting motors (26) are functionally connected to the outer ends of the counter-cutter blade (6) and which can be operated alternately independently of each other,
- which is equipped with a device for producing electrical spark discharges when the optimum cutter gap (7) has been attained, which is functionally connected to the adjusting mechanism (8), where:
- at least the counter-cutter blade (6) is electrically insulated from the remaining components of the chopper unit (1), which includes at least the chopping knives (3),
- between the counter-cutter blade (6) and the electrically isolated parts contained in the counter-cutter blade (6) and the remaining components of the chopper unit (1) an electrical connection (37) is made, in which is located a high-tension source (38) and an ammeter (39),
- the cutter gap (7) at the start of the adjusting process is greater than the optimum value for the cutter gap (7), and when no spark discharges are yet occurring between the counter-cutter blade (6) and the chopping knives (3),
- the cutter gap (7) on one side of the counter-cutter blade (6) is diminished by the adjusting motor (26) of the adjusting mechanism (8) situated on this side, during which the spark discharges measured by the ammeter (39) are recorded and passed on to the evaluation unit (40),
- on attaining a number of spark discharges between every chopping knife (3) and the counter-cutter blade (6) on this side, which is the case when the optimum cutter gap (7) exists, the evaluation unit (40) stops the adjustment process of the counter-cutter blade (6) to the chopping knives (3),
- the cutter gap (7) on the other side of the counter cutter blade (6) is diminished by the adjusting motor (26) of the adjusting mechanism (8) located there, during which the spark discharges measured by the ammeter (39) are recorded and passed on to the evaluation unit (40),
- on attaining a number of spark discharges between every chopping knife (3) and the counter cutter blade 6) on this side too, which is the case when the optimum cutter gap (7) exists, the evaluation unit (40) stops the adjustment process of the counter cutter blade (6) towards the chopping knives (3).

10. A procedure in accordance with claim 9, **characterized in that**, the cutter gap (7) over the entire breadth of the chopper cylinder (4) at the start of the adjustment process lies in the order of magnitude of 0.5 mm.

11. A procedure in accordance with claims 9 and 10, **characterised in that**, for the first-described adjustment process for the counter cutter blade (6) the high-tension applied on that side is higher than for the subsequent adjustment process on the opposite side.

12. A procedure in accordance with claims 9 to 11, **characterised in that**, for the first-mentioned adjustment process of the counter-cutter blade (6) the high-tension applied on that side lies within the range 1 to 1.5 kilovolts.

13. A procedure in accordance with claims 9 to 12, **characterised in that**, for the second adjustment process of the counter-cutter blade (6) the high-tension voltage applied to the other side lies within the range 0.25 to 0.75 kilovolts.

14. A procedure in accordance with claims 9 to 13, **characterised in that**, the adjusting of the cutter gap (7) between the chopping knives (3) and the counter-cutter blade (6) is undertaken after regrinding of the chopping knives (3) and with a sharp-edged counter-cutter blade (6).

15. A procedure in accordance with claims 9 to 14, **characterised in that**, the adjusting of the cutter gap (7) between the chopping knives (3) and the counter-cutter blade (6) is undertaken with a stationary chopper cylinder (4).

16. A procedure in accordance with claims 9 to 14, **characterised in that**, the adjusting of the cutter gap (7) between the chopping knives (3) and the counter-cutter blade (6) is undertaken with a rotating chopper cylinder (4).

## Revendications

1. Dispositif pour le réglage de l'intervalle de coupe sur des hacheurs, en particulier des récolteuses-hacheuses-chargeuses, avec un groupe hacheur (1) :
- dont le tambour hacheur (4) est doté de lames tranchantes (3),
- dont le contre-couteau (6) présente un intervalle de coupe (7) par rapport au cercle de rotation (5) des lames tranchantes (3),
- sur lequel se trouve un mécanisme de réglage (8) à actionnement indépendant de part et d'autre pour la modification de l'intervalle de coupe (7),
- qui est équipé d'un dispositif générant des amorçages d'arc électriques lors de l'atteinte de l'intervalle de coupe optimal (7) et en liaison fonctionnelle avec le mécanisme de réglage (8), dans lequel :
- au moins le contre-couteau (6) est isolé électriquement par rapport aux autres éléments du groupe hacheur (1) dont au moins les lames tranchantes (3) font partie,
- entre le contre-couteau (6) et les pièces isolées électriquement qui comprennent le contre-couteau (6) et les autres éléments du groupe hacheur (1), il existe une connexion électrique (37) dans laquelle se trouvent une source de haute tension (38) et un ampèremètre (39),
- la tension de la source de haute tension (38) a au moins une valeur telle qu'un amorçage d'arc est déjà présent avant le contact des lames tranchantes (3) et du contre-couteau (6),
- l'ampèremètre (39) est en liaison fonctionnelle avec le mécanisme de réglage (8) pour l'intervalle de coupe (7).

2. Dispositif selon la revendication 1, **caractérisé en ce que** le tambour hacheur (3) doté de lames tranchantes (4) est isolé électriquement par rapport au carter de tambour hacheur (18), dans lequel le contre-couteau (6) est agencé.

3. Dispositif selon la revendication 1, **caractérisé en ce que** une couche céramique (10) non-conductrice d'électricité se trouve entre le contre-couteau (6) et le support de support de contre-couteau (9).

4. Dispositif selon les revendications 1 à 3, **caractérisé en ce que** la source de haute tension (38) est une source de courant continu.

5. Dispositif selon les revendications 1 à 4, **caractérisé en ce que** la tension de la source de haute tension (38) est modifiable à volonté.

6. Dispositif selon les revendications 1 à 5, **caractérisé en ce que** l'ampèremètre (39) est en liaison fonctionnelle avec le mécanisme de réglage (8) pour l'intervalle de coupe (7) par le biais d'une unité d'analyse (40).

7. Dispositif selon une ou plusieurs des revendications 1 à 6, **caractérisé en ce que** l'unité d'analyse (40) a la forme d'un dispositif enregistrant l'intensité du courant de même que son évolution dans le temps pour l'amorçage d'arc entre le contre-courant (6) et les lames tranchantes (3).

8. Dispositif selon une ou plusieurs des revendications 1 à 7, **caractérisé en ce que** une unité de calcul est prévue dans l'unité d'analyse (40), laquelle calcule la vitesse de rotation du tambour hacheur (4) compte tenu des amorçages d'arc entre chaque lame tranchante (3) et le contre-couteau (6) ainsi que le nombre de lames tranchantes (6) qui se trouvent sur le tambour hacheur (4).

9. Procédé pour le réglage de l'intervalle de coupe sur des hacheurs, en particulier des récolteuses-hacheuses-chargeuses, avec un groupe hacheur (1).
- dont le tambour hacheur (4) est doté de lames tranchantes (3),
- dont le contre-couteau (6) présente un intervalle de coupe (7) par rapport au cercle de rotation (5) des lames tranchantes (3),
- sur lequel se trouve un mécanisme de réglage (8) avec les moteurs de positionnement (26 ) pour la modification de l'intervalle de coupe (7), ces moteurs de positionnement (26) étant en liaison fonctionnelle avec les extrémités extérieures du contre-couteau (6) et sont actionnables alternativement de manière indépendante l'un par rapport à l'autre,
- qui est équipé d'un dispositif générant des amorçages d'arc électriques lors de l'atteinte de l'intervalle de coupe optimale (7), dispositif qui est en liaison fonctionnelle avec le mécanisme de réglage (8), dans lequel :
- au moins le contre-couteau (6) est isolé électriquement par rapport aux autres éléments du groupe hacheur (1) dont au moins les lames tranchantes (3) font partie,
- entre le contre-couteau (6) et les pièces isolées électriquement incluant le contre-couteau (6) et les autres éléments du groupe hacheur (1), une connexion électrique (37) est établie dans laquelle se trouvent une source de haute tension (38) et un ampèremètre (39),
- l'intervalle de coupe (7) au début du processus de réglage, est supérieur à la valeur optimale de l'intervalle de coupe (7) pour lequel aucun amorçage d'arc n'a encore lieu entre le contre-couteau (6) et les lames tranchantes (3),
- l'intervalle de coupe (7), sur un côté du contre-couteau (6), est diminué par le moteur de positionnement (26) du mécanisme de réglage (8) qui se trouve de ce côté, les amorçages d'arc à introduire étant enregistrés par l'ampèremètre (39) et transmis à l'unité d'analyse (40),
- avec l'atteinte d'un nombre défini d'amorçages d'arc entre chaque lame tranchante (3) et le contre-couteau (6) de ce côté, ce qui est le cas pour l'intervalle de coupe (7) optimal présent, l'unité d'analyse (40) arrête le rapprochement du contre-couteau (6) par rapport aux lames tranchantes (3),
- l'intervalle de coupe (7) sur l'autre côté du contre-couteau (6) est diminué par le moteur de positionnement (26) du mécanisme de réglage (8) qui se trouve de ce côté, les amorçages d'arc à introduire étant enregistrés par l'ampèremètre (39) et transmis à l'unité d'analyse (40),
- avec l'atteinte d'un nombre défini d'amorçages d'arc entre chaque lame tranchante (3) et le contre-couteau (6) de ce côté également, ce qui est le cas pour l'intervalle de coupe (7) optimal présent, l'unité d'analyse (40) arrête le rapprochement du contre-couteau (6) par rapport aux lames tranchantes (3),

10. Procédé selon la revendication 9, **caractérisé en ce que** l'intervalle de coupe (7), sur la totalité de la largeur du tambour hacheur (4) se situe dans un ordre de grandeur de 0,5 mm au début du processus de réglage.

11. Procédé selon les revendications 9 et 10, **caractérisé en ce que** la haute tension appliquée d'un côté pour le rapprochement, exécuté en premier lieu, du contre-couteau (6) est supérieure à celle du côté opposé pour le rapprochement qui suit.

12. Procédé selon les revendications 9 à 11, **caractérisé en ce que** la haute tension appliquée d'un côté pour le rapprochement, exécuté en premier lieu, du contre-couteau (6) se situe dans un domaine compris entre 1 et 1,5 kilovolt.

13. Procédé selon les revendications 9 à 12, **caractérisé en ce que** la haute tension appliquée de l'autre côté pour le deuxième rapprochement du contre-couteau (6) se situe dans un domaine compris entre 0,25 et 0,75 kilovolt.

14. Procédé selon les revendications 9 à 13, **caractérisé en ce que** le réglage de l'intervalle de coupe (7) entre les lames tranchantes (3) et le contre-couteau (6) est réalisé après l'affûtage des lames tranchantes (3) et avec un contre-couteau (6) aux arêtes vives.

15. Procédé selon les revendications 9 à 14, **caractérisé en ce que** le réglage de l'intervalle de coupe (7) entre les lames tranchantes (3) et le contre-couteau (6) est réalisé alors que le tambour hacheur est à l'arrêt (4).

16. Procédé selon les revendications 9 à 14, **caractérisé en ce que** le réglage de l'intervalle de coupe (7) entre les lames tranchantes (3) et le contre-couteau (6) est réalisé alors que le tambour hacheur (4) est en rotation.
